# EUROPÄISCHE PATENTANMELDUNG

(11) **EP 2 385 315 A2**
(43) Veröffentlichungstag der Anmeldung: **09.11.2011**
(21) Anmeldenummer: 11001198.8
(22) Anmeldetag: 15.02.2011
(51) Int. Cl.: F24D 3/14

(54) **Im Querschnitt mäanderförmig ausgebildete Schiene zum Fixieren von Heizrohren einer Flächenheizung**

(30) Priorität: 08.05.2010 DE 202010006618 U
(71) Anmelder: Feist, Artus, 53424 Remagen (DE)
(72) Erfinder: Feist, Artus, 53424 Remagen (DE)
(74) Vertreter: Walther, Walther & Hinz GbR

(57) **Zusammenfassung**

Gegenstand der Erfindung ist eine im Querschnitt mäanderförmig ausgebildete Schiene (1) zum Fixieren von Heizrohren (20) einer Flächenheizung mit mehreren beabstandet zueinander angeordneten Taschen (10) zur Aufnahme der Heizrohre (20), wobei die Taschen (10) im Querschnitt U-Form aufweisen, wobei die Taschen (10) durch ein Deckelement (11) verbunden sind, wobei in Längsrichtung (Pfeil 50) der Schiene (1) sowohl die Deckelemente (11), als auch die Schenkel (12) der U-förmigen Taschen (10) gesickt sind, nicht aber der Steg (13) der U-förmigen Taschen (10).

## Beschreibung

Die Erfindung betrifft eine im Querschnitt mäanderförmig ausgebildete Schiene zum Fixieren von Heizrohren einer Flächenheizung mit mehreren beabstandet zueinander angeordneten Taschen zur Aufnahme der Heizrohre, wobei die Taschen im Querschnitt U-Form aufweisen, wobei die Taschen durch ein Deckelement verbunden sind.

Eine im Querschnitt mäanderförmige Schiene der eingangs genannten Art ist aus der DE 31 01 717 C2 bekannt. Diese Schiene, die aus einem Metallblech gebogen ist, zeichnet sich u. a. dadurch aus, dass die Schiene zwei in Längsrichtung der Schiene verlaufende Sicken aufweist, die beabstandet und parallel zueinander verlaufen. Jede Sicke verläuft hierbei sowohl entlang der Unterseite des Steges der U-förmigen Tasche, den Schenkeln der U-förmigen Tasche und auch auf dem Deckelement, das zwei U-förmige Taschen miteinander verbindet. Die Sicke hat eine Tiefe von etwa 1 ½ bis 2 mm.

Die Einbringung der Sicke erfolgte damals vor dem Hintergrund, dass die Schiene eine solche Steifigkeit erhalten sollte, dass diese sowohl in Längsals auch in Querrichtung ausreichend formstabil ist. Die Sicken sind nach unten aus der Schiene herausgedrückt. Das bedeutet, dass bei Aufstehen der Schiene auf dem Unterboden die Schiene aufgrund der Höhe der Sicke einen Abstand von etwa 2 mm zum Unterboden aufweist.

Nun ist man immer bestrebt, den Aufbau einer Fußbodenheizung möglichst flach zu gestalten. Gleichzeitig soll allerdings sichergestellt sein, dass die Schiene in sich stabil ist, und zwar sowohl in Längs- als auch in Querrichtung, wie dies bereits beschrieben wurde. Dies insbesondere auch vor folgendem Hintergrund:
Die Heizrohre werden teilweise unter nicht unerheblichen Spannungen in die Schiene eingelegt. Aufgrund der Eigenspannung der Heizrohre besteht insofern immer die Gefahr, insbesondere dann, wenn die Heizrohre sehr eng verlegt werden, dass die Eigenspannung der Heizrohre ausreichend ist, um die Schiene zumindest partiell vom Boden abzuheben, d. h. die Schiene auch zu verbiegen.

Die der Erfindung zugrunde liegende Aufgabe besteht demzufolge darin, diese divergierenden Anforderungen zur Deckung zu bringen, nämlich zum einen dafür zu sorgen, dass der Aufbau einer Fußbodenheizung mit solchen Schienen möglichst flach gehalten werden kann, und darüber hinaus die Schiene derart zu gestalten, dass diese in sich formstabil ist, und zwar sowohl in Längs- als auch in Querrichtung. In diesem Zusammenhang ist bereits ausgeführt worden, dass der Stand der Technik hierzu zwei parallel und beabstandet zueinander durchlaufende Sicken vorschlägt, wobei die Sicken im eingebauten Zustand nach unten durchgedrückt sind, sodass die Schiene im Bereich des Steges der U-förmigen Taschen in der Höhe der Sicke beabstandet zum Unterboden aufsteht. Es wurde nun allerdings überraschenderweise herausgefunden, dass es für die Stabilität in Längs- und in Querrichtung völlig ausreichend ist, wenn die Sicken den Steg der U-förmigen Tasche nicht erfassen. Das heißt, dass sich die Sicke nur im Bereich der Schenkel der U-förmigen Taschen und des Deckelementes befindet, nicht allerdings im Steg der U-förmigen Tasche, d. h. im Boden der U-förmigen Tasche. Trotz im Wesentlichen gleichbleibender Formstabilität wird hierdurch erreicht, dass der Bodenaufbau insgesamt um bis zu 2 mm flacher gehalten werden kann.

Weitere vorteilhafte Merkmale sind den Unteransprüchen zu entnehmen.

So ist insbesondere vorgesehen, dass die Deckelemente mindestens eine Bohrung zur Durchführung von Befestigungsmitteln zur Befestigung der Schiene auf einem Untergrund aufweisen. Die Bohrung dient hierbei insbesondere der Aufnahme einer Schraube zur Verbindung der Schiene mit dem Unterboden.

Aus dem Stand der Technik ist bekannt, im Steg der U-förmigen Tasche Bohrungen vorzusehen, um mit Hilfe von Schrauben die Schiene auf dem Unterboden zu befestigen. Es hat sich allerdings gezeigt, dass die Schraube häufig mit ihrem Schraubenkopf über die Oberseite des Stegs übersteht, sodass die Heizrohre auf dem Schraubenkopf aufliegen, was in zweierlei Hinsicht nachteilig ist. Zum einen überragen dann, wenn die Schraubenköpfe über den Steg der U-förmigen Tasche nach oben überstehen, die Heizrohre die Oberseite der Schiene, d. h., die Heizrohre überragen die Deckelemente der Schiene. Zum anderen sind im Bereich des Übergangs von den Schenkeln der U-förmigen Tasche zu den Deckelementen warzenförmige Vorsprünge vorgesehen, die der Fixierung der Heizrohre in den Schienen dienen. Liegen die Heizrohre zu hoch in den U-förmigen Taschen der Schiene ein, können sie durch die warzenförmigen Vorsprünge nicht sicher erfasst werden. Die Folge hiervon ist, dass bei der Verarbeitung die Gefahr besteht, dass die Heizrohre aus den Schienen herausspringen.

Wenn insofern die Bohrungen zur Aufnahme der Schrauben zur Befestigung der Schienen an dem Untergrund in dem Bereich des Deckelementes angeordnet sind, dann ergeben sich die zuvor beschriebenen Probleme nicht.

Insbesondere hat sich herausgestellt, dass dann, wenn die Deckelemente eine Breite aufweisen, die wesentlich breiter als die Stegbreite ist, dass dann die Schiene insgesamt eine ausreichende Stabilität aufweist, selbst wenn die Sicken sich nur, wie dies bereits ausgeführt worden ist, im Bereich der Schenkel der U-förmigen Taschen und der Deckelemente befinden.

Anhand der Zeichnungen wird die Erfindung nachstehend beispielhaft näher erläutert.

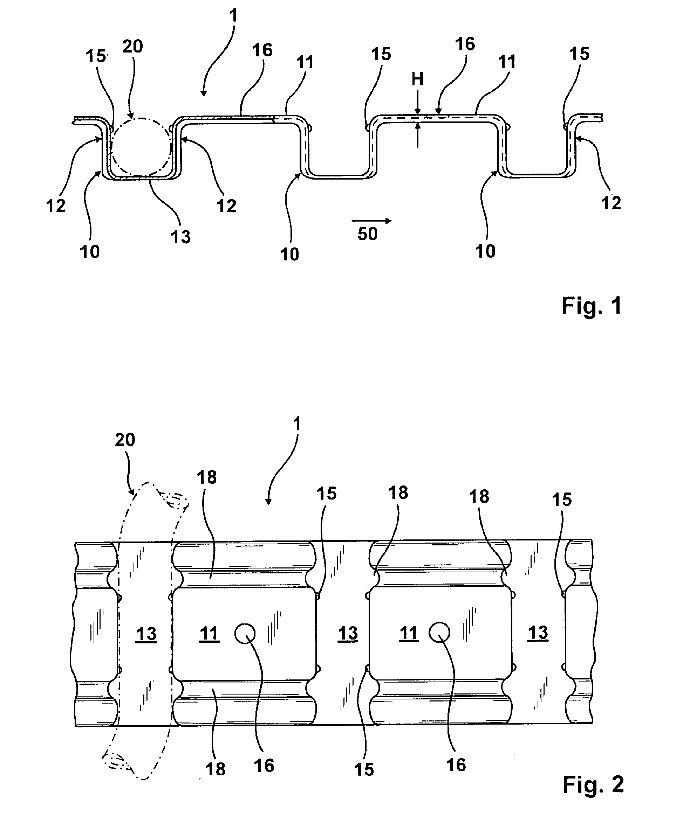

Fig. 1 zeigt die Schiene in einer Seitenansicht;
Fig. 2 zeigt eine Ansicht von oben auf die Schiene, wobei schematisch das Heizrohr einliegend in der U-förmigen Tasche dargestellt ist.

Die im Querschnitt mäanderförmig ausgebildete Schiene besitzt das Bezugszeichen 1. Die Schiene 1 setzt sich zusammen aus mehreren U-förmigen Taschen 10, wobei die einzelnen U-förmigen Taschen durch Deckelemente 11 miteinander in Verbindung stehen. Die U-förmigen Taschen 10 besitzen Schenkel 12, die durch einen Steg 13 miteinander in Verbindung stehen. Im Bereich des Übergangs von den Schenkeln 12 zu dem Deckelement 11 sind warzenförmige Vorsprünge 15 vorgesehen, die dafür sorgen, dass das Heizrohr 20 einclipsbar in der U-förmigen Tasche 10 gehalten wird. Erkennbar ist, dass im Bereich des Deckelementes 11 und der Schenkel 12 der U-förmigen Taschen 10 zwei, zueinander beabstandet längs der Schiene (Pfeil 50) verlaufende Sicken 18 vorgesehen sind. Eine solche Sicke 18 setzt sich allerdings nicht in dem Steg 13 der U-förmigen Tasche 10 fort. Die Folge hiervon ist, dass der Fußbodenaufbau in der Höhe H der Sicke 18 geringer sein kann, als dies der Fall ist, wenn, wie nach dem Stand der Technik, die Sicke ebenfalls den Steg 13 der U-förmigen Tasche 10 erfasst.

Das Deckelement 11 weist darüber hinaus die Bohrung 16 auf, die insbesondere als angesenkte Bohrung für eine Schraube mit Senkkopf ausgebildet ist, um keinen Überstand des Schraubenkopfes über der Schiene zu erzeugen, wobei durch die Schraube die Schiene auf dem Unterboden oder einer Wand fixiert wird.

## Patentansprüche

1. Im Querschnitt mäanderförmig ausgebildete Schiene (1) zum Fixieren von Heizrohren (20) einer Flächenheizung mit mehreren beabstandet zueinander angeordneten Taschen (10) zur Aufnahme der Heizrohre (20), wobei die Taschen (10) im Querschnitt U-Form aufweisen, wobei die Taschen (10) durch ein Deckelement (11) verbunden sind,
**dadurch gekennzeichnet,**
**dass** in Längsrichtung (Pfeil 50) der Schiene (1) sowohl die Deckelemente (11), als auch die Schenkel (12) der U-förmigen Taschen (10) gesickt sind, nicht aber der Steg (13) der U-förmigen Taschen (10).

2. Schiene nach Anspruch 1,
**dadurch gekennzeichnet,**
**dass** die Deckelemente (11) mindestens eine Bohrung (16) zur Durchführung von Befestigungsmitteln zur Befestigung der Schiene (1) auf einem Untergrund aufweisen.

3. Schiene nach einem der voranstehenden Ansprüche,
**dadurch gekennzeichnet,**
**dass** in den U-förmigen Taschen (10) im Bereich des Übergangs zu dem Deckelement (11) warzenförmige Vorsprünge (15) zur Fixierung der Heizrohre (20) in der Schiene (10) vorgesehen sind.

4. Schiene nach einem der voranstehenden Ansprüche,
**dadurch gekennzeichnet,**
**dass** das Deckelement (11) breiter ist, als der Steg (13) in der Tasche (10).
